# DEMANDE DE BREVET EUROPEEN

(11) **EP 0 533 594 A1**
(43) Date de publication de la demande: **24.03.1993**
(21) Numéro de dépôt: 92420298.9
(22) Date de dépôt: 09.09.1992
(51) Int. Cl.: H04N 17/02

(54) **Appareil et méthode de mesure et d'affichage du rapports de phase entre la sous-porteuse et la synchronisation horizontale pour signaux vidéo multiples**

(30) Priorité: 18.09.1991 US 761658
(71) Demandeur: VIDEOTEC INC., Pottstown, Pennsylvania 19464 (US)
(72) Inventeur: Moyer, Todd K., Boyertown, Pennsylvania 19512 (US)
(74) Mandataire: Dupuis, François

(57) **Abrégé**

Le dispositif comprend :
- un générateur chronométrique (36) d'échantillons prévoyant un chronomètre d'étalonnage à une fréquence fixe qui est sensiblement plus élevée que la fréquence du porteur auxiliaire ;
- un digitaliseur (32) pouvant être couplé sur lesdites sources multiples et sur le chronomètre (36), le digitaliseur assurant des échantillons numériques représentant une amplitude de chacune des sources au moins durant un intervalle entre une impulsion de synchrone horizontale et un début d'un éclatement couleur d'au moins une ligne horizontale dans chacune desdites sources multiples;
- une mémoire digitale (34) couplée sur le digitaliseur (32), et fonctionnant de manière à mémoriser les échantillons numériques;
- un microprocesseur (44) couplé sur la mémoire digitale (34), le microprocesseur fonctionnant de manière à comparer successivement lesdits échantillons numériques et à identifier ainsi un point médian d'un bord directeur d'une impulsion de synchrone horizontal et un croisement zéro d'un signal d'éclatement parmi les échantillons successifs, et à déterminer un laps de temps entre ces identifications, le microprocesseur déterminant la différence de phase SC/H à partir du laps de temps écoulé ;
- un moyen d'affichage (56) couplé sur le microprocesseur (44), le moyen d'affichage fonctionnant de manière à afficher la différence de phase SC/H pour toutes les sources, dans un but de comparaison.

## Description

L'invention concerne des méthodes et un appareil ou système pour la mesure et l'affichage du rapport de phases entre porteur auxiliaire et synchrone horizontal (la phase SC/H) d'un signal vidéo. L'invention se rapporte plus particulièrement à un système et à une méthode digitale de haute précision pour la mesure et l'affichage de la phase SC/H et simultanément, d'une pluralité de signaux vidéo.

Selon l'état de la technique, les systèmes pour l'affichage vidéo couleur comportent des zones phosphores discontinues disposées en un schéma répétitif de couleurs. Les points ou segments individuels, pour une couleur particulière donnée, sont activés par le rayon électronique, au fur et à mesure que celui-ci explore l'écran en lignes horizontales. L'information couleur vidéo, mise en code dans les signaux vidéo, est présentée en coïncidence minutée avec l'exploration du rayon sur les schémas couleur répétitifs. De ce fait, le rapport de phase entre l'information couleur mise en code et les impulsions synchrones, qui déclenchent les circuits exploration de l'appareil d'affichage, est une considération importante. L'information couleur est synchronisée sur une fréquence de porteur auxiliaire définie par l'impulsion éclatement couleur qui se produit peu après l'impulsion synchrone horizontale, pour chaque ligne horizontale. Un équipement de contrôle est prévu pour la mesure et l'affichage du rapport de phase entre le porteur auxiliaire et l'impulsion synchrone horizontale. Cette phase est généralement connue comme phase SC/H (porteur auxiliaire / horizontale), ce contrôle étant destiné à être utilisé par le personnel de production vidéo, le personnel d'émissions, etc...

Les dispositifs connus pour la mesure et l'affichage de la phase SC/H sont limités à des dispositions analogiques variables pour assurer les temporisations de phase, les signaux de rampe et similaires. Il en résulte que le seul moyen pratique pour la mesure de la phase SC/H d'une pluralité de signaux vidéo, consiste en une duplication rigoureuse de groupes ou systèmes de mesure et d'affichage pour chaque signal devant être mesuré.

Toutefois, des circuits multiples n'agissent pas de manière identique par suite de variations dans les composants et similaires. Ces circuits multiples donnent des résultats qui ne sont pas identiques, même pour un signal. En outre, les dispositifs analogiques sont susceptibles de créer des problèmes de précision et de dérive.

Selon une autre méthode connue de mesure de phase SC/H, un signal de porteur auxiliaire est bloqué en phase sur le synchrone horizontal, tandis qu'un autre signal de porteur auxiliaire est bloqué en phase sur l'éclatement couleur. La différence de phase SC/H est définie par la différence de phase de ces deux porteurs auxiliaires, et est affichée par exemple, en utilisant les signaux comme les entrées X et Y d'un oscilloscope de manière à obtenir un affichage de phases du type vecteuroscope. La différence de phases est représentée par le déplacement angulaire du point affiché par rapport à un point ou ligne de référence représentant un angle de phase zéro.

De tels dispositifs sont divulgués dans les brevets US 4587551 - Penney ; 4788585 - Suzuki ; et 4694324 - Matney. Il est bien entendu qu'il est également possible d'afficher l'étendue de la différence de phases entre deux signaux, sous forme d'une lecture numérique ou sous forme d'un barographe.

Selon une autre méthode connue, on mesure le laps de temps entre le point médian du bord directeur de l'impulsion de synchrone horizontale et un croisement zéro de l'éclatement couleur. En variante, le laps de temps peut être mesuré entre le bord directeur de l'impulsion synchrone et le croisement zéro suivant, d'un porteur auxiliaire de référence régénéré à partir de l'éclatement couleur. Ceci exige normalement un circuit analogique ou un circuit combinant analogie-digitalisation, pour trouver le point médian du bord directeur et déterminer le laps de temps.

Ce laps de temps peut être traduit en degrés de différence de phases par la mise en rapport du temps et de la période du porteur auxiliaire, par exemple au nominal de 3,579545 MHz pour un porteur auxiliaire NTSC. Les résultats peuvent être affichés sous la forme d'une lecture numérique, d'un barographe, etc....

Le brevet US 4758890 - Boyce, divulgue un circuit jour la comparaison de la fréquence de porteur auxiliaire avec une impulsion de synchrone horizontale. L'impulsion de synchrone est temporisée par un circuit de temporisation variable contrôlé dans une boucle de rétro-alimentation et fonctionnant de manière à temporiser l'impulsion synchrone, afin d'assurer la correspondance des bords directeurs de l'impulsion synchrone et le croisement zéro du porteur auxiliaire.

Les brevets US 4603346 - MELLING, Jr ; 4680620 - BAKER et al; et 4792845 - Judge, montrent d'autres exemples comparateurs et d'affichages de phases.

Le brevet US 4470064 - Michener, divulgue un circuit pouvant fonctionner de manière à saisir et à digitaliser la valeur d'un porteur auxiliaire bloqué sur éclatement et la valeur d'un porteur auxiliaire de quadrature en tant que moyen d'obtention des données nécessaires pour le calcul de la phase SC/H. On peut citer également le poste de Mesure Tektronic modèle VM-700 Vidéo qui calcule la phase SC/H à partir d'un signal digitalisé.

Le VM-700 et le dispositif Michener emploient des techniques digitales. Le dispositif Michener peut être commuté entre deux entrées vidéo. Toutefois, ces dispositifs ne peuvent traiter qu'un signal à la fois.

Si un signal transmis lors d'une phase SC/H est brusquement remplacé par un signal lors d'une phase SC/H différente, il en résulte un flash de pureté de couleur médiocre et/ou une variation dans l'intensité.

Il est souhaitable pour mesurer la phase SC/H, d'utiliser un appareil précis et exempt de dérives, susceptible de mesurer et d'afficher des sources vidéo multiples simultanément, c'est-à-dire sans qu'il soit nécessaire pour l'opérateur de commuter entre des sources vidéo pour les mesures s'effectuant une à la fois. Un tel système est particulièrement utile comme outil de production et de diffusion en liaison avec des interrupteurs vidéo couplés à des sources vidéo multiples, telles qu'une pluralité de sources préenregistrées et similaires, contribuant à la fusion de signaux multiples en un programme.

Compte-tenu de ces éléments et pour remédier aux inconvénients résultant de l'état de la technique citée, la présente invention prévoit un circuit digital pouvant fonctionner pour la réalisation de mesures de phases SC/H de sources multiples, et prévoit également un moyen pour l'affichage simultané des résultats dans un format de préférence graphique. Il est possible de cette manière de contrôler les conditions d'une pluralité de sources.

Un des problèmes que se propose de résoudre l'invention est d'obtenir une mesure exacte et sans dérive du rapport de phase entre porteur auxiliaire et synchrone horizontal pour chacun des signaux d'une pluralité de signaux vidéo, et de l'affichage des résultats simultanément, en vue d'une comparaison graphique et numérique.

Un autre problème que se propose de résoudre l'invention est de minimiser la complexité et le coût d'équipement de mesure de phase SC/H contrôlant des sources vidéo multiples.

Un but également de l'invention consiste dans l'utilisation d'un processeur digital pour la mesure directe de la différence de phase SC/H pour des sources multiples, les résultats étant affichés en format de comparaison directe.

Pour résoudre ces différents problèmes, il a été conçu et mis au point un dispositif de mesure et d'affichage de différence de phases entre le porteur auxiliaire et le synchrone horizontal (phase SC/H) pour des sources multiples de signaux vidéo mixtes, comprenant:
- un générateur assurant un chronométrage d'échantillons à une fréquence fixe ;
- un digitaliseur procurant des échantillons numériques représentant une amplitude de chacune des sources pendant, au minimum, l'intervalle entre l'impulsion de synchrone horizontale et l'éclatement couleur d'au moins une ligne horizontale dans chacune des sources.

Les échantillons sont enregistrés dans une mémoire. Un processeur compare les échantillons successifs, tout en faisant le comptage des échantillons ou en contrôlant les laps de temps, de manière à trouver le point médian du bord directeur de l'impulsion synchrone et un croisement zéro de l'éclatement. Le laps de temps (ou le nombre d'échantillons) définit la différence de phases SC/H, et est converti en un angle de phases en rapport avec la fréquence du porteur auxiliaire, et est affiché pour toutes les sources pour une comparaison graphique directe.

Le digitaliseur, la mémoire, le processeur et l'affichage sont couplés par l'intermédiaire d'un collecteur de données. De préférence, un chronomètre étalonneur à haute fréquence capte les données dans une mémoire de stockage de données en ligne, pour procéder à une analyse numérique au moyen d'un processeur fonctionnant d'une manière asynchrone avec le chronomètre étalonneur. Un compteur de lignes, répondant aux synchrones horizontaux dans chaque source, remis à zéro sur retracé vertical, déclenche le captage d'une pluralité d'échantillons de données à une ligne horizontale sélectionnée.

De préférence, c'est la même ligne qui est captée dans chacune des sources. Le nombre de lignes est affiché conjointement avec la comparaison graphique. Une mémoire d'affichage et un contrôleur d'affichage convertissent les données pour l'affichage sur un tube cathodique. Les fonctions de mesure et d'affichage de phases SC/H sont de préférence une option d'affichage parmi un certain nombre de ces options incorporées dans un appareil de contrôle selon l'invention.

L'invention est décrite, ci-après plus en détail à l'aide des dessins annexés, dans lesquels :

La figure 1 est une illustration schématique d'ensemble montrant les éléments de l'invention.

La figure 2 est une vue en élévation montrant l'affichage résultant pour la phase SC/H.

La figure 3 est un schéma chronographique montrant le synchrone horizontal et la partie d'éclatement couleur d'un signal vidéo.

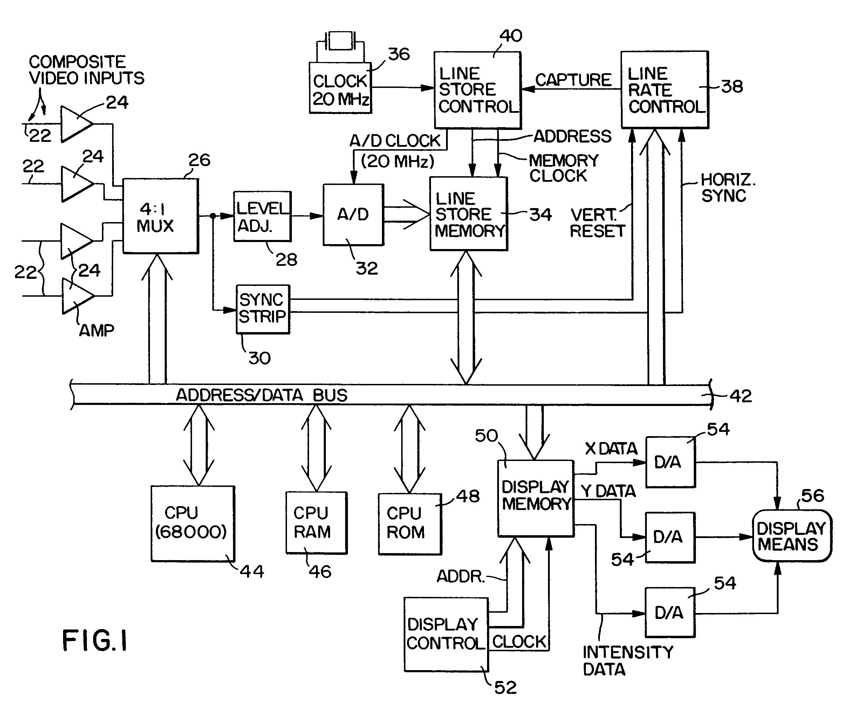

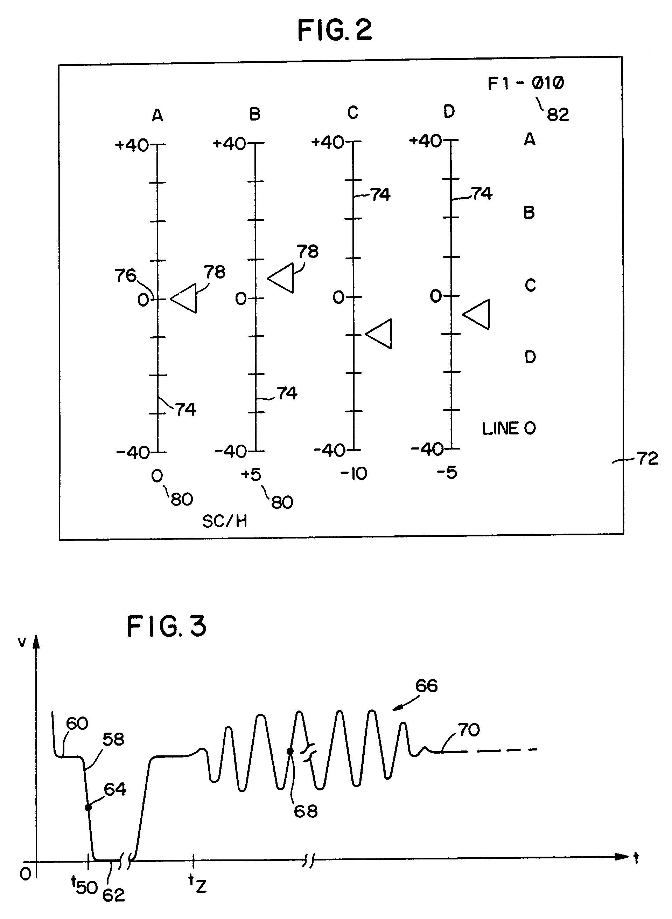

Comme illustré à la figure 1, l'appareil est couplé sur une pluralité de sources vidéo (22), dont la différence de phases SC/H doit être mesurée et affichée graphiquement par l'intermédiaire d'un moyen d'affichage (56) pour la production d'une image comme illustré à la figure 2. La différence de phase SC/H est définie comme représentant le laps de temps entre le point médian (64) du bord directeur (58) de l'impulsion synchrone horizontale et le croisement zéro survenant en (68) de l'impulsion d'éclatement (66), mesuré en degrés de phases à la fréquence d'éclatement ou fréquence de porteur auxiliaire vidéo (figure 3).

Chacune des entrées composites vidéo (22) est couplée sur un amplificateur tampon d'entrée (24) dont les sorties sont couplées sur un multiplicateur 4:1 (26), prévu pour fonctionner sous le contrôle d'un microprocesseur (44) de manière à sélectionner un des quatre signaux en vue du couplage sur la sortie du multiplicateur (26). Le microprocesseur fonctionne en cycle répétitif dans les entrées, et la donnée affichée pour chaque canal représente la dernière fois à laquelle sa phase SC/H a été mesurée.

Le signal vidéo sélectionné est réglé pour décalage de courant continu et est gradué pour l'amplitude par un circuit de réglage de niveau (28), afin d'employer l'envergure totale d'un convertisseur analogique numérique (32) qui étalonnera le signal vidéo. Additionnellement, un déclencheur de synchrone (30) assure l'extraction des impulsions de synchrone horizontale, et les dirige sur un contrôleur de régime de lignes (38). Le contrôleur de régime de lignes (38) compte les impulsions de synchrone horizontale, assurant ainsi le comptage des lignes de vidéo, et remet le comptage à zéro lors de l'apparition d'un synchrone vertical. Le contrôleur de régime de lignes déclenche un contrôleur de stockage de lignes (40) lorsque le compte de lignes est égal à un nombre pré-déterminé, c'est-à-dire à la ligne vidéo à laquelle la phase SC/H doit être mesurée.

Plus particulièrement, pour des signaux vidéo NTSC, la différence de phase SC/H est mesurée pour un nombre de lignes dix du champ un du signal vidéo. Il est également possible de mesurer la différence de phase SC/H à une ligne différente, en utilisant un moyen d'entrée (non représenté) couplé sur le contrôleur de régime de lignes (38). Normalement, il est désirable de mesurer la phase SC/H pour toutes les sources (22) à la même ligne dans leurs champs respectifs. Lorsque le compte de lignes est égal au nombre pré-déterminé, le signal "captage" couplé sous le contrôleur de mémorisation de lignes (40) est activé, et une ligne de vidéo est étalonnée et mémorisée.

Le convertisseur analogique numérique (32) est couplé à une horloge d'étalonnage (36) par l'intermédiaire du contrôleur de mémorisation de lignes (40). Le régime d'étalonnage est sensiblement plus élevé que la fréquence du porteur auxiliaire vidéo (qui est d'environ 3,58 MHz), ce régime d'étalonnage étant de 20 MHz par exemple, ce qui assure ainsi un étalonnage tous les 50 nS durant la ligne vidéo. La mémoire de stockage de lignes (34) est couplée sur la sortie du convertisseur (32), et alimente les données échantillons sous le contrôle d'un signal de l'horologe de mémoire à partir du contrôleur de mémorisation de lignes (40), et à une adresse incrémentée par ledit contrôleur, de sorte que les échantillons sont mémorisés de manière successive.

La mesure de la phase SC/H selon l'invention est de préférence une des fonctions de l'appareil ou système de contrôle vidéo qui assure des fonctions additionnelles telles que l'affichage d'une ligne de vidéo sélectionnée, mais il est préférable que la ligne vidéo soit étalonnée dans sa totalité. Toutefois, pour ce qui est de la phase SC/H seule, il est seulement nécessaire d'obtenir un nombre suffisant d'échantillons pour la définition du bord directeur de l'impulsion de synchrone horizontal et d'un croisement zéro de l'éclatement à la fréquence du porteur auxiliaire.

Le microprocesseur (44) assure l'exécution d'un programme stocké dans une mémoire morte du type ROM (48), en utilisant une mémoire vive du type RAM (46) couplées toutes les deux sur le microprocesseur (44) au moyen d'un collecteur adresses/données (42) qui est également couplé sur la mémoire de stockage de ligne (34). Le micropresseur (44) est programmé pour effectuer les opérations mathématiques nécessaires pour la conversion de la donnée étalonnée en une différence de phase SC/H. Le microprocesseur (44) fonctionne de manière indépendante et asynchrone par rapport à l'étalonnage, au travers du contrôleur de stockage de lignes (40).

Dans une mise en oeuvre préférée, le microprocesseur (44) n'est pas couplé pour accès direct à la mémoire de stockage de lignes (34). Par conséquent, une fonction de la mémoire de stockage de lignes consiste à transférer la donnée étalon, au moins pour la mesure de la phase SC/H, depuis la mémoire de stockage de lignes jusqu'à la mémoire RAM (46) couplée sur le microprocesseur (44), par l'intermédiaire du collecteur adresses/données (42). Ceci peut s'accomplir sur une base régulière, ou à la conclusion de l'enregistrement de la ligne vidéo.

Le microprocesseur examine les échantillons successifs de manière à déterminer le point 50 % du bord directeur du synchrone horizontal, et un croisement zéro de l'éclatement du porteur auxiliaire. Une recherche pour le bord directeur de l'impulsion de synchrone horizontal est exécutée en premier lieu par le calcul de la dérivée du signal, dans la zone d'échantillonnage où l'on peut obtenir l'établissement du bord directeur du synchrone puis, par la détermination de l'échantillon pour lequel la dérivée est la plus négative. Cet échantillon est désigné ci-après par **P**.

Alors que l'impulsion de synchrone est nominalement sinusoïdale en profil, la dérivée est à un négatif maximum au point médian, normalement à un point dans le temps, dans l'intervalle d'étalonnage, immédiatement avant ou après le captage de l'échantillon considéré **P**, mais également en coïncidence éventuelle avec l'étalon. A partir de l'échantillon **P**, qu'on admet comme étant celui qui est le plus proche du point 50 %, plusieurs échantillons antérieurs et postérieurs sont examinés. Les échantillons antérieurs définissent la zone de niveau (60) de l'impulsion de synchrone, comme illustré à la figure 3. Les échantillons postérieurs définissent le niveau de plancher de synchrone (62). Le niveau 50 % précis du bord directeur est alors calculé comme représentant la moyenne de ces deux niveaux.

Le niveau 50 % calculé du bord directeur est comparé avec les niveaux des échantillons adjacents à l'échantillon **P** auxquels la dérivée était la plus négative, afin de déterminer si le niveau 50 % précis s'est présenté avant ou après l'instant auquel l'échantillon **P** a été collecté. Le moment exact du niveau 50 % (t₅₀) est ensuite interpolé dans l'intervalle, entre l'échantillon **P** et l'échantillon précédent ou suivant, c'est à dire sur un point précis dans le temps entre les échantillons.

Cette interpolation est basée sur la position du niveau 50 % calculé dans la gamme définie par la différence entre le niveau de l'échantillon **P** et de l'échantillon suivant ou précédent. L'interpolation est exécutée en adaptant une courbe sinusoïdale sur **P** et sur l'échantillon suivant ou précédent. Le moment du point 50 % est ensuite calculé par le microprocesseur. Il est bien évident que si le niveau 50 % calculé est égal au niveau de l'échantillon **P**, le point 50 % est considéré comme s'étant présenté au moment de l'échantillon **P**.

Une recherche pour le croisement zéro survenant de l'éclatement couleur est effectuée par examen des dérivées du signal, c'est à dire de la différence d'échantillon à échantillon dans la zone où il est estimé que l'éclatement couleur a eu lieu. L'échantillon correspondant, désigné par **M**, ayant la dérivée la plus positive, est admis comme étant l'échantillon le plus rapproché du croisement zéro survenant de l'éclatement, en conséquence de la nature sinusoïdale du signal.

Une fonction numérique à indice plus élevé est alors appliquée à plusieurs échantillons avoisinant l'échantillon **M**, de manière à dégager par filtrage la partie éclatement haute fréquence du signal, et à définir le niveau (70), comme illustré à la figure 3, à savoir la composante basse fréquence du signal durant l'éclatement. De la même façon, en ce qui concerne le point 50% du synchrone horizontal, le niveau (70) est comparé avec les échantillons, immédiatement adjacents à l'échantillon **M**, afin de déterminer si le croisement zéro s'est produit avant ou après l'instant de l'échantillon **M**. Le point proportionné du niveau de croisement zéro dans la gamme entre le niveau de l'échantillon **M** et de l'échantillon suivant ou précédent est ensuite mis en relation avec le moment où les échantillons ont été captés, en interpolant ainsi le moment ("t_{z}") précis du croisement zéro.

La différence entre les temps (t₅₀) et (t_{z}) est calculée ensuite de manière à donner une différence en unités de temps. Il est cependant nécessaire que la différence de phase SC/H soit exprimée en degrés de phases de la fréquence du porteur auxiliaire. La différence de temps (t_{z} - t₅₀) est convertie en un certain nombre de cycles à la fréquence du porteur auxiliaire (par exemple 3,579545 MHz pour NTSC temps nominal de porteur auxiliaire ou une période d'environ 280nS), ce qui résulte en une intégrale, plus un nombre fractionnel de cycles. Le résultat est arrondi à une intégrale et soustrait du nombre intégrale-plus-fraction, ce qui donne une fraction entre - 0,5 et + 0,5. Cette fraction est multipliée 360 fois, afin d'obtenir la différence de phase exprimée en nombre de degrés, dans une gamme se situant entre - 180 degrés et + 180 degrés.

D'une manière préférée, les résultats du calcul sont mémorisés par le microprocesseur dans une mémoire cyclique FIFO, comprenant une FIFO pour chacun des signaux de la pluralité des signaux vidéo à l'entrée. Les entrées dans la FIFO, pour chaque source, sont mises en valeur moyenne avec les autres entrées dans la FIFO pour cette source, ce qui réduit ainsi les effets des erreurs dûes au bruit et des erreurs aléatoires. Les résultats sont affichés aussi bien graphiquement que numériquement sur l'affichage ou annonceur.

Selon une mise en oeuvre préférée, le dispositif d'affichage comporte une mémoire d'affichage du type Pixel (50), présentant un champ de pixels qui sont lus répétitivement en combinaison avec un contrôleur d'affichage (52). Les parties variables du champ d'affichage pixel, à savoir les marqueurs mobiles (78), les affichages numériques (80) et le nombre de lignes (82), sont produits à partir des résultats des calculs par le microprocesseur (44) et transmis à la mémoire d'affichage (50) par l'intermédiaire du collecteur adresses-données (42) (figure 2). Les parties invariables de l'affichage, incluant les lignes de graduation (74) et les labels descriptifs, nécessitent seulement d'être alimentées une fois par le microprocesseur (44), dans la mémoire d'affichage (50), de préférence selon un programme mémorisé dans la mémoire ROM (48) et mis en application sur l'initialisation du mode opératoire SC/H du dispositif.

La mémoire d'affichage peut être utilisée simplement pour produire des données images clair/sombre. Chaque bit dans la mémoire représente un pixel qui sera une des deux intensités.

En variante, il peut être prévu un affichage plus complexe, par exemple un affichage couleur, c'est à dire par exemple un affichage avec les éléments marqueurs (78) montrés dans une couleur distincte ou dans une intensité distincte.

Dans une mise en oeuvre préférée, la donnée pixel dans la mémoire d'affichage est lue répététivement sous forme de donnée d'intensité, et dans un même temps, les entrées de déflexion X et Y sur le moyen d'affichage sont cyclées dans des positions X et Y correspondantes. Par exemple, le moyen d'affichage peut être un tube cathodique avec circuits d'entrainement de déflection et un driver cinéscope, dont les sorties sont modulées par les niveaux analogiques produits par des convertisseurs numériques analogiques (54) couplés sur les sorties de données de la mémoire d'affichage (50), laquelle est adressée et calculée par le contrôleur d'affichage (52) pour lecture de données entrée sortie.

L'invention assure un moyen de haute précision pour la mesure de la différence de phase SC/H d'une pluralité de signaux de sources simultanément, en permettant une comparaison graphique et numérique directe de la phase SC/H pour toutes les sources. De cette manière l'opérateur peut facilement mettre au point le réglage d'un interrupteur ou similaire par rapport à des sources vidéo présentant des différences de phase SC/H qui sont rapprochées l'une de l'autre, de façon que la commutation d'une source à l'autre ait un effet minimum sur la pureté de la couleur et sur la perception par un spectateur.

Il est possible de prévoir un certain nombre de variante pour l'invention. La nature particulière de l'affichage graphique peut bien entendu varier dans ses détails de présentation de données, de couleur, etc... L'envergure des échelles (74) peut être prévue variable sous le contrôle de l'utilisateur, ou automatiquement à l'aide du microprocesseur, en vue de régler les lignes de graduation et les limites supérieure et inférieure suffisamment larges pour répondre à la plus grande différence de phase SC/H tout en utilisant autant de zone d'échelle disponible que possible. Ces variantes, ainsi que d'autres, sont considérées comme restant dans le cadre de l'invention définie par le présent mémoire descriptif.

L'invention a été examinée en liaison avec des mises en oeuvre préférées indiquée à titre d'exemple, et les variantes pouvant être apportées à ces mises en oeuvre préférées seront évidentes pour les hommes de métier.

## Revendications

**-1 -** Dispositif destiné à mesurer la différence de phase entre porteur auxiliaire et synchrone horizontal (SC/H) pour des sources multiples de signaux vidéo composite, caractérisé en ce qu'il comprend :
- un générateur chronométrique (36) d'échantillons prévoyant un chronomètre d'étalonnage à une fréquence fixe qui est sensiblement plus élevée que la fréquence du porteur auxiliaire ;
- un digitaliseur (32) pouvant être couplé sur lesdites sources multiples et sur le chronomètre (36), le digitaliseur assurant des échantillons numériques représentant une amplitude de chacune des sources au moins durant un intervalle entre une impulsion de synchrone horizontale et un début d'un éclatement couleur d'au moins une ligne horizontale dans chacune desdites sources multiples;
- une mémoire digitale (34) couplée sur le digitaliseur (32), et fonctionnant de manière à mémoriser les échantillons numériques;
- un microprocesseur (44) couplé sur la mémoire digitale (34), le microprocesseur fonctionnant de manière à comparer successivement lesdits échantillons numériques et à identifier ainsi un point médian d'un bord directeur d'une impulsion de synchrone horizontal et un croisement zéro d'un signal d'éclatement parmi les échantillons successifs, et à déterminer un laps de temps entre ces identifications, le microprocesseur déterminant la différence de phase SC/H à partir du laps de temps écoulé ;
- un moyen d'affichage (56) couplé sur le microprocesseur (44), le moyen d'affichage fonctionnant de manière à afficher la différence de phase SC/H pour toutes les sources, dans un but de comparaison.

**-2-** Dispositif vidéo selon la revendication 1, caractérisé en ce que le laps de temps est déterminé par un certain nombre de cycles d'étalonnage entre le point médian du bord directeur (58) et le croisement zéro (68).

**-3-** Dispositif vidéo selon la revendication 1, caractérisé en ce que la mémoire digitale (34) inclue une mémoire de stockage de lignes déclenchée à un régime horizontal de sources vidéo de manière à alimenter les échantillons au régime d'étalonnage, et inclue également une mémoire (46) (48).

**-4-** Dispositif vidéo selon la revendication 3, caractérisé en ce qu'il comprend un moyen pour transférer, de la mémoire de stockage (34) de lignes à la mémoire (46) (48), au minimum les échantillons captés durant l'intervalle entre le synchrone horizontal et l'éclatement couleur.

**-5-** Dispositif vidéo selon la revendication 4, caractérisé en ce que la mémoire de stockage de lignes (34) fonctionne de manière à mémoriser des échantillons durant la totalité des lignes horizontales de sources vidéo (22).

**-6-** Dispositif vidéo selon la revendication 4, caractérisé en ce qu'il comprend un contrôleur de régime de lignes (38) fonctionnant de manière à compter les synchrones horizontaux dans les sources et à déclencher l'étalonnage à une ligne pré-déterminée.

**-7-** Dispositif vidéo selon la revendication 6, caractérisé en ce que la mémoire digitale (34), le microprocesseur (44) et l'affichage sont couplés par l'intermédiaire d'un collecteur (42), le dispositif comprenant en outre un contrôleur d'affichage (52) couplé sur le collecteur (42), et fonctionnant indépendamment pour le contrôle dudit moyen d'affichage.

**-8-** Dispositif vidéo selon la revendication 4, caractérisé en ce qu'il comprend une mémoire d'affichage (50), et un contrôleur d'affichage (52), le microprocesseur (44) fonctionnant de manière à alimenter les données d'image d'affichage dans la mémoire d'affichage (50), le contrôleur d'affichage (52), fonctionnant indépendamment du microprocesseur pour l'affichage des données images.

**-9-** Dispositif vidéo selon la revendication 1, caractérisé en ce que l'affichage fonctionne de manière à produire une comparaison graphique côte à côte de la différence de phase SC/H pour les sources.

**-10-** Dispositif vidéo selon la revendication 9, caractérisé en ce qu'il comprend un moyen (36) fonctionnant pour compter les synchrones horizontaux dans les sources, ledit moyen étant remis à zéro lors du retraçage vertical, les échantillons numériques, dans ledit système, étant sélectionnés comme fonction d'un comptage des synchrones horizontaux.

**-11 -** Dispositif vidéo selon la revendication 10, caractérisé en ce que la ligne horizontale sélectionnée est déterminée pour au moins une source indépendamment des autres sources.

**-12-** Dispositif vidéo selon la revendication 10, caractérisé en ce qu'il comprend en outre un moyen d'entrée pour sélectionner un nombre de la ligne horizontale sélectionnée pré-déterminée.

**-13-** Dispositif vidéo selon la revendication 10, caractérisé en ce que le nombre de la ligne horizontale sélectionnée pré-déterminée est montré sur le moyen d'affichage (56) avec ladite comparaison graphique.

**-14-** Méthode pour mesurer et afficher la différence de phase (SC/H) entre porteur auxiliaire et synchrone horizontal de sources de signal vidéo multiples, comprenant les opérations suivantes :
- étalonnage et enregistrement d'une pluralité d'échantillons de chacune des sources de signal vidéo, en procédant dans chacune des sources à tour de rôle, tout au moins dans une zone de signaux entre le synchrone horizontal et un croisement zéro d'un éclatement couleur ;
- pour chacune des sources à tour de rôle, examen des étalons de manière à identifier un niveau 50 % d'un bord directeur du synchrone horizontal et du croisement zéro de l'éclatement couleur ;
- détermination d'un laps de temps entre la survenance du niveau 50 % et du croisement zéro pour chacune des sources à tour de rôle ;
- conversion du laps de temps en un nombre de périodes à une fréquence de l'éclatement couleur pour chacune des sources à tour de rôle ;
- affichage graphique d'une partie fractionnelle du nombre de période pour toutes les sources, sous forme de graphique côte à côte sur un moyen d'affichage, de manière à afficher la phase SC/H de toutes les sources simultanément.

**-15-** Méthode selon la revendication 14, caractérisé en ce que au moins le niveau 50 %, ou au moins le croisement zéro, est interpolé sur un moment particulier par le calcul d'un niveau précis pour ledit niveau 50 % au moins ou ledit croisement zéro au moins, et par l'ajustement du niveau précis sur une courbe nominale d'au moins ledit synchrone horizontal ou d'au moins ledit éclatement couleur.

**-16-** Méthode selon la revendication 14, caractérisé en ce que l'on maintient une moyenne courante d'une pluralité de valeurs SC/H successive pour chacune des sources, et dans laquelle la moyenne courante est affichée comme phase SC/H pour chaque source respective.

**-17-** Méthode selon la revendication 14, caractérisé par la sélection d'un nombre de lignes horizontales particulières pour chacune des sources, l'étalonnage et l'enregistrement pour chaque source étant dans ladite méthode effectués comme se rapportant à la ligne horizontale particulière.

**-18-** Méthode selon la revendication 17, caractérisé par l'affichage du nombre de lignes sur le moyen d'affichage.

**-19-** Méthode selon la revendication 14, caractérisé en ce que ledit étalonnage et ledit enregistrement sont effectués de façon asynchrone, par rapport auxdites opérations d'examen, de détermination, de conversion et d'affichage.

**-20-** Méthode selon la revendication 19, caractérisé en ce que ledit étalonnage et ledit enregistrement sont effectués à une fréquence sensiblement plus élevée que la fréquence de l'éclatement couleur, ladite méthode incluant en outre le transfert de données étalonnées d'une mémoire fonctionnant pour le stockage des données d'étalonnage à la fréquence sensiblement plus élevée vers une mémoire accessible à un processeur digital, en vue de l'accomplissement des opérations d'examen, de détermination et de conversion à une fréquence asynchrone par rapport à l'étalonnage.
